# EUROPEAN PATENT APPLICATION

(11) **EP 2 128 491 A1**
(43) Date of publication of application: **02.12.2009**
(21) Application number: 08380168.8
(22) Date of filing: 30.05.2008
(51) Int. Cl.: F16H 21/36

(54) **Mechanism and method for converting a rotary movement into another alternating linear movement or vice versa**

(71) Applicant: Herrera Seco, Fidelio, 28016 Madrid (ES)
(72) Inventor: Herrera Seco, Fidelio, 28016 Madrid (ES)
(74) Representative: ABG Patentes, S.L.

(57) **Abstract**

The invention relates to a device which comprises at least one fixed part (3) or frame comprising a circular or cylindrical element the inner surface of which has means (31) which can cooperate mechanically with other parts, at least one mobile part (1) intended to perform a rotary movement about a shaft coaxial with respect to said circular element of said fixed part (3), at least one mobile part (4) which can be displaced according to a linear movement, including a circular or cylindrical element the inner surface of which has means (41) which can cooperate mechanically with said mobile part (1) intended to perform a rotary movement, and at least one part (2) intended to be interposed between said circular or cylindrical element of said fixed part (3) and said circular or cylindrical element of said mobile part (4) and which cooperates mechanically with both elements such that the conversion of the circular movement into linear movement or vice versa is carried out without creating transverse force components.

## Description

### Technical Field of the Invention

The present invention is aimed at a mechanism or device which can convert a rotary movement into an alternating linear movement, and vice versa. Likewise, the present invention is aimed at a method for carrying out the mentioned conversion between a rotary movement into another alternating linear movement, and vice versa.

The present invention is applicable to engineering fields such as precision metering devices, devices for injecting small volumes, etc. The present invention also particularly relates to the application of said mechanism and method to the particular case of a motor of a piston.

### Background and State of the Art

The mechanisms for converting between a rotary movement and another linear movement are known and have a broad field of technical applications, among which the mechanisms for controlling rotation parts by means of bars or cranks or the mechanisms intended to transmit stress between rotary and linear movements in which the linear part of the movement includes the use of pistons can be emphasized without being exhaustive. The classic form of converting an alternating linear movement into another circular movement is by means of the known connecting rod-crank mechanism. A number of documents have been published which described mechanisms of this type for the most varied applications.

The mechanism object of the present invention which will be described below converts, as has been stated above, an alternating linear movement into another circular movement and vice versa, in the same way as the known connecting rod-crank mechanism.

This traditional system has some problems. Firstly, there are problems derived from the loss due to friction: indeed, whenever gears, rack and pinion mechanisms, etc. are used in these systems, the challenge of limiting the losses due to friction is considered by resorting to demanding manufacturing processes to reduce clearances, reduce surface roughness, and improve lubrication, etc., all of this meaning higher costs.

Finally, the inventor has identified that a source of problems in the mechanisms and methods known up until now lies in the occurrence of external transverse components of the forces transmitted by the members moving linearly; i.e., that the mechanical stress circuit is not closed in itself, therefore in order for a connecting rod-crank mechanism to operate correctly, the additional cooperation of the cylinder or sleeve inside which the piston moves is needed, such that when the piston travels, it does so laterally pushing the cylinder with the subsequent loss of mechanical efficiency due to friction.

Another differential feature is that in the connecting rod-crank mechanism, the mathematical relationship between the rotational movement of the crank and the translational movement of the piston --or of the foot of the connecting rod- is not a sinusoidal function but rather approximately, whereas in the mechanism resulting from the present invention, the function relating both movements is mathematically sinusoidal.

Thus, the primary objective of the present invention is, therefore, to solve all the mentioned drawbacks and provide to that end a mechanism and a method by means of which a circular movement is converted into another alternating linear movement and vice versa, in the same way as the connecting rod-crank mechanism, but in a more perfect manner without the occurrence of the negative effects described and in a more mathematically correct manner.

Another objective of the present invention is to reduce the wear of the parts and the losses due to friction.

Another objective of the present invention is to set forth a device and a method simple and easy to handle and manufacture and the cost of which is competitive.

### Summary of the Invention

These and other objects of the invention are achieved by means of a device converting a rotary movement into another linear movement or vice versa according to independent claim 1 and a method for converting a rotary movement into another linear movement or vice versa according to independent claim 9. Advantageous embodiments are defined by means of the dependent claims.

The present invention solves the previously described technical problems. To that end, in a first inventive aspect, the present invention is aimed at a device intended to convert a rotary movement into another linear movement or vice versa, comprising the following elements:
- at least one fixed part including a circular or cylindrical element the inner surface of which has means which can cooperate mechanically with other parts,
- at least one mobile part intended to perform a rotary movement about a shaft coaxial with said circular or cylindrical element of said fixed part,
- at least one mobile part which can be displaced according to a linear movement, including a circular or cylindrical element the inner surface of which has means which can cooperate mechanically with the previous said mobile element intended to perform a rotary movement, and
- at least one part intended to be interposed between the said circular or cylindrical element of the said fixed part and the said circular or cylindrical element of the said mobile part of the immediately previous paragraph, which part cooperates mechanically with both elements such that the conversion of circular movement into linear movement or vice versa is carried out without creating transverse force components which have to externally neutralized.

In a second inventive aspect, the present invention is also aimed at a method for converting a rotary movement into another linear movement or vice versa, comprising the following steps:
a) providing at least one fixed part including a circular or cylindrical element the inner surface of which has means which can cooperate mechanically with other parts,
b) providing at least one mobile part intended to perform a rotary movement coaxial with the geometric axis of the circular or cylindrical element of said fixed part,
c) providing at least one mobile part which can be displaced according to a linear movement, including a circular or cylindrical element the inner surface of which has means which can cooperate mechanically with said mobile part of the previous paragraph,
d) providing at least one part intended to be interposed between the circular or cylindrical inner area of the said fixed part of step a) and the circular or cylindrical area of the said mobile part of step c), which part can cooperate with both elements,
e) operating at least one of the two mobile parts such that the conversion of the circular movement into linear movement or vice versa is carried out without the occurrence of secondary external force components.

Said means which can cooperate mechanically advantageously comprise outer or inner toothings, toothed wheels and/or pinions.

Said mobile part intended to perform a rotary movement can include at least one element intended to transmit to the exterior the torque generated in the mechanism by the linear stress applied on the said mobile part which can be displaced linearly. Alternatively, said mobile part intended to perform a rotary movement can include at least one element which can receive from the exterior a torque which in the said part which can perform a linear movement is converted into an alternating linear stress with the same direction and orientation as the mentioned linear movement.

In said mobile part intended to perform a rotary movement, the outwardly projecting shaft can have at its end a flywheel-crank and at the opposite end it has associated thereto a pinion which does not rotate concentrically but rather orbits and cooperates mechanically with said mobile part which can move linearly.

In one of the embodiments of the invention, said part intended to be interposed between said circular or cylindrical element of said fixed part and said circular or cylindrical element of said part which can move linearly includes at least an eccentric disk and a toothed pinion intended to cooperate mechanically with the inner toothing of said fixed part, this being how the eccentric disk of said interposed part can rotate concentrically and freely with the geometric axis of the inner toothing of said part which can be displaced linearly. The eccentricity of the eccentric disk is the suitable one so that the mentioned pinion and the mentioned inner toothing of said fixed part remain permanently meshed and the gear ratio of both elements having a value of 1/2.

In one of the embodiments of the invention, said mobile part which can rotate concentrically with said fixed part is in the form of a crank at the end of the rotation shaft of which it can have coupled thereto a flywheel-crank and at the end of the orbiting parallel shaft or bend it can have a circular or cylindrical element or pinion intended to cooperate mechanically with said circular or cylindrical part of said part which can move linearly, this being how this circular or cylindrical part can be an inner toothing. The eccentricity of the bend is the suitable one so that the mentioned pinion and the mentioned inner toothing can remain permanently meshed and the gear ratio of both elements having a value of 1/2.

In an embodiment of the invention, the mobile part which can move linearly can include a piston.

### Description of the Drawings

To complement the description which is being made and with the aim of aiding to better understand the features of the invention according to a preferred practical embodiment thereof, a set of drawings is attached as an integral part of said description, in which the following has been shown with an illustrative and non-limiting character:
Figure 1 shows an embodiment of a mechanism according to the object of the present invention.
Figures 2 to 7 show said embodiment of the present invention in different positions.
Figure 8 shows each of the elements forming the mechanism of the invention separately.
Figure 9 shows a particular embodiment of the mechanism according to the object of the present invention with a piston.

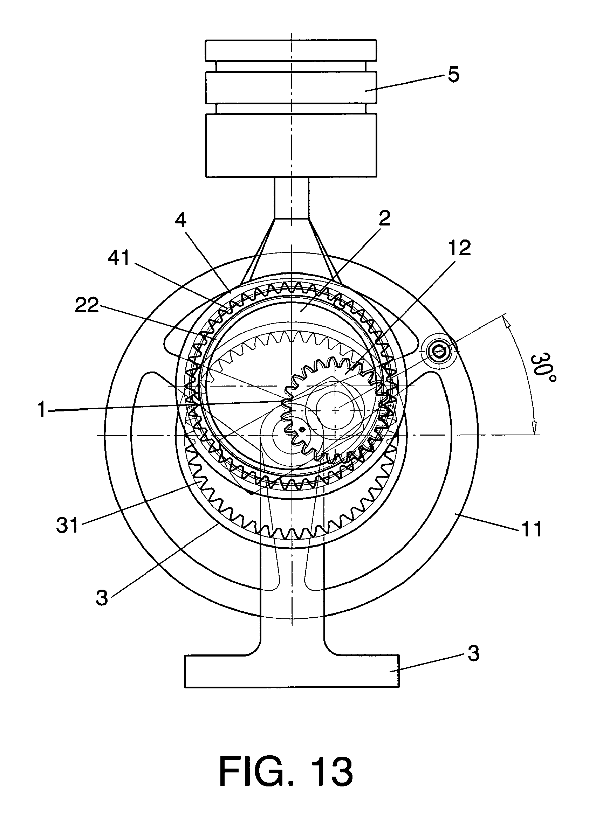

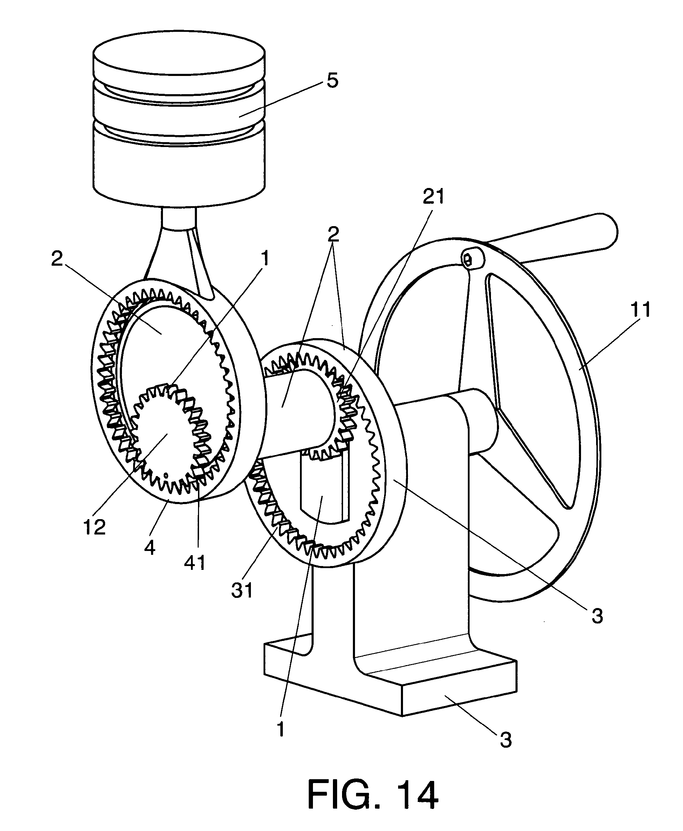

Figures 10 to 14 show said particular embodiment of the present invention in different positions.

### Detailed Description of the Invention

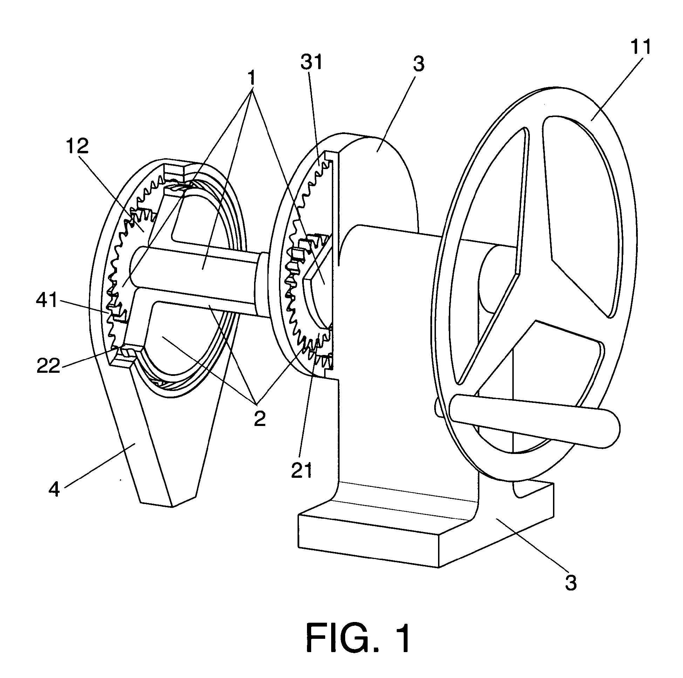

Figure 1 shows an embodiment of the present invention. Said figure shows a mechanism which can convert the rotary movement of the flywheel-crank 11, located at the right, into the alternating linear movement (in this particular example, vertical movement) of the runner 4, which is the part observed at the left of the drawing. The conversion can also take place in the opposite direction.

In the mentioned Figure 1, the main elements forming part of this example of the present invention can be distinguished. In particular, the runner part 4 is observed, intended to perform the vertical linear movement and provided with an inner crown wheel 41, the eccentric disk 2, a part integral with corresponding pinion 21 at one end and with the corresponding bearing 22 at the other end, the crankshaft 1, a part integral with its corresponding pinion 12 at one end and with the aforementioned flywheel-crank 11 at the other end, and finally the base or integral body 3 of the fixed crown provided with inner toothing 31.

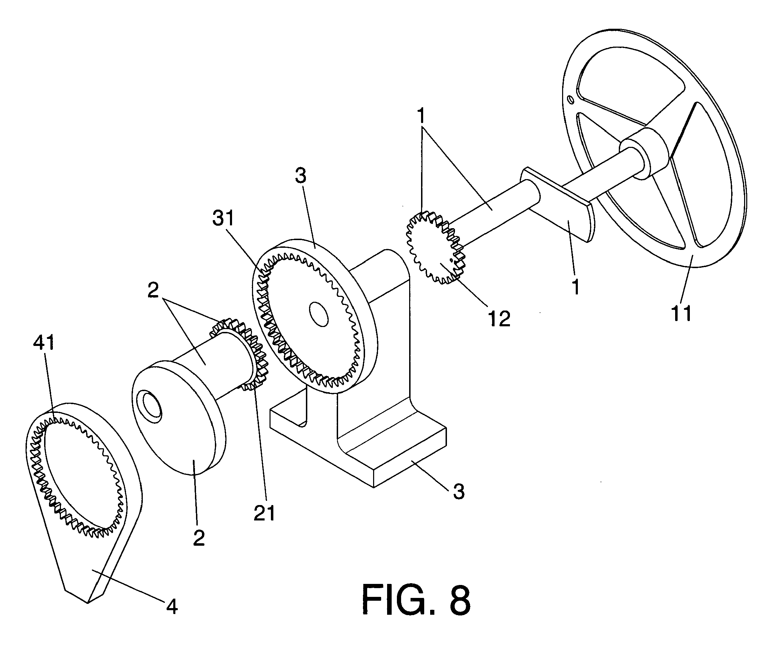

Figure 8 shows each of these elements separately.

As can be especially observed in this same Figure 1, as well as in any of the remaining figures, the pinion 12 of the crankshaft 1 meshes with the inner toothing 41 of the runner 4, and the pinion 21 of the eccentric disk 2 in turn meshes with the inner toothing 31 of the fixed crown of the integral body 3.

For the movement of the runner 4 to be linear, it is necessary that the eccentricity of the crankshaft 1 is equal to that of the eccentric disk 2 and, furthermore, that the ratio of both conjugated gear pairs has a value of 1/2, i.e., that each inner crown has twice the number of teeth as the pinion with which it meshes.

In the particular case shown in the drawings, the back and forth movement of the runner 4 occurs in the vertical plane and for this to be so, a necessary condition is that at a given moment, the two geometric axes of the crankshaft 1, the two geometric axes of the eccentric disk 2 - of the actual disk 2 and of the pinion 21- coincide in one and the same vertical plane and that the respective eccentricities are in opposition and not superposed. In the event of the respective eccentricities were superposed in the considered moment, the respective eccentricities are not superposed, the final movement of the runner 4 would be a back and forth movement in the horizontal plane.

Generally, in the operation of the mechanism object of the present invention, a linear sinusoidal displacement movement from the center of the runner 4 corresponds to the rotation of the flywheel 11, which runner is in turn prevented from rotating on its own axis, lacking any degree of freedom, such that the successive positions that it can possibly occupy in space are always equipollent positions of itself.

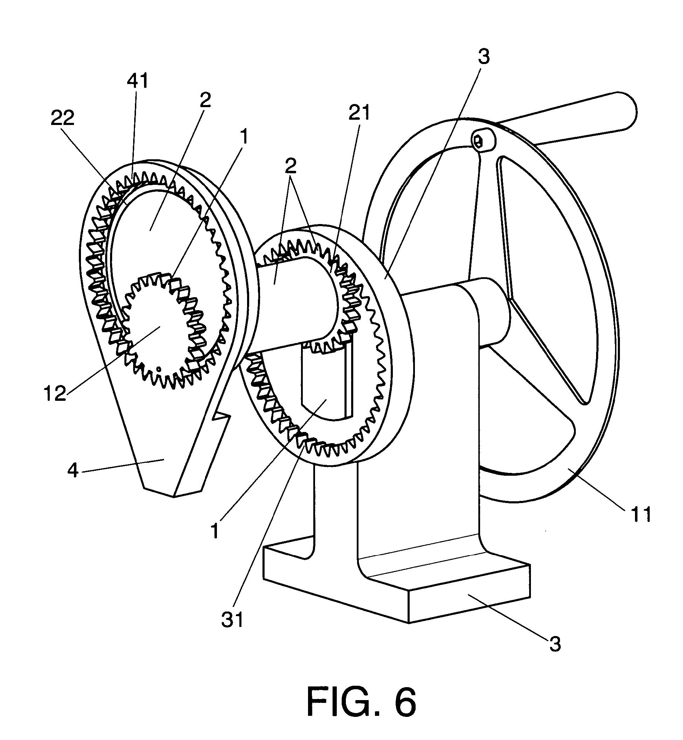

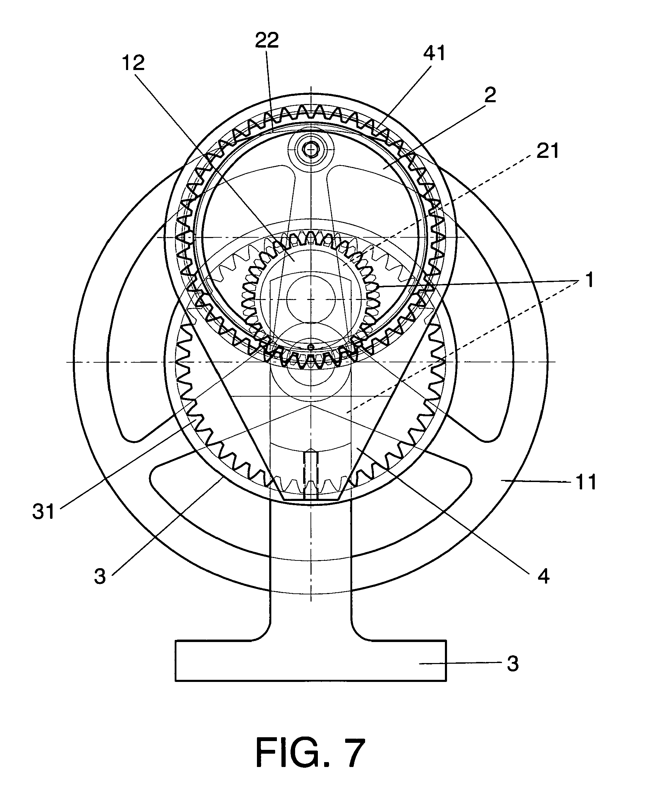

Figures 6 and 7 show the initial position of the mechanism with the flywheel 11 and the runner 4 in the highest position for the particular case in which the direction of the linear movement of the runner 4 is performed in the vertical plane.

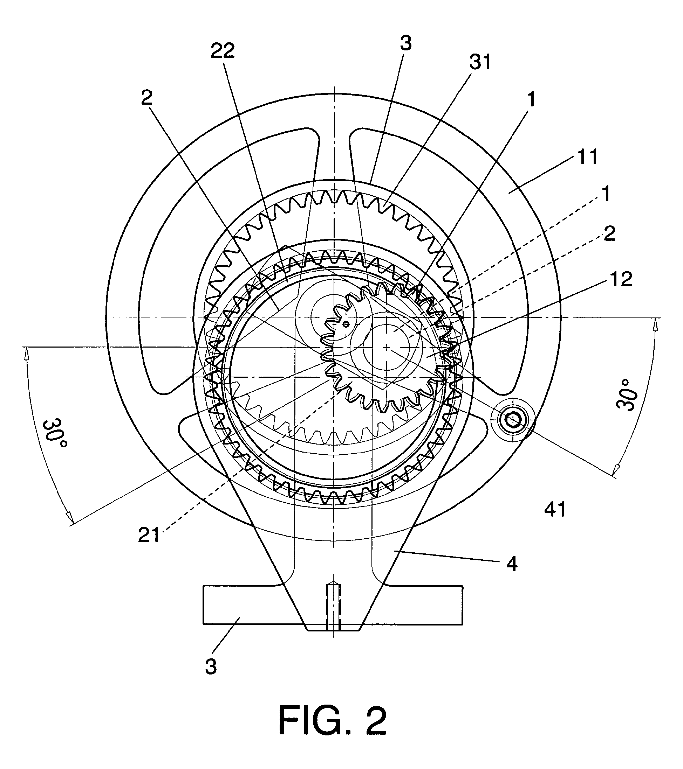

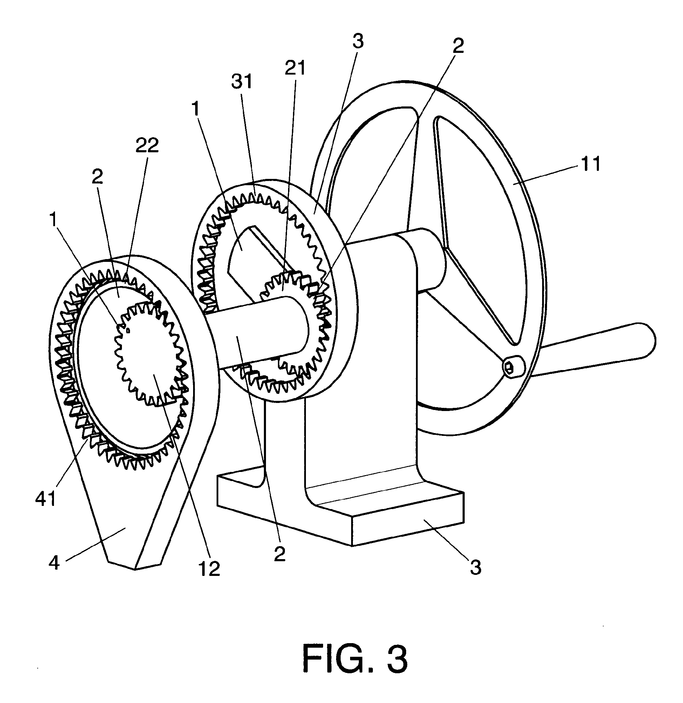

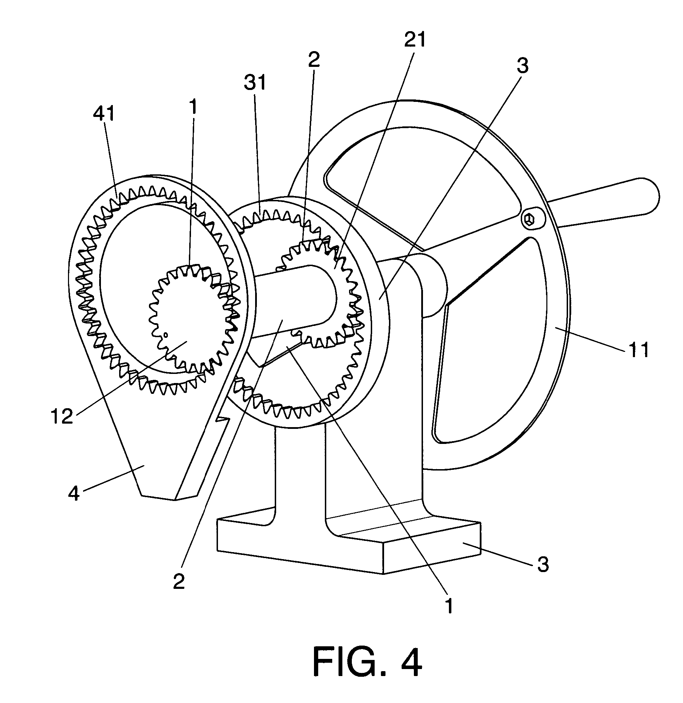

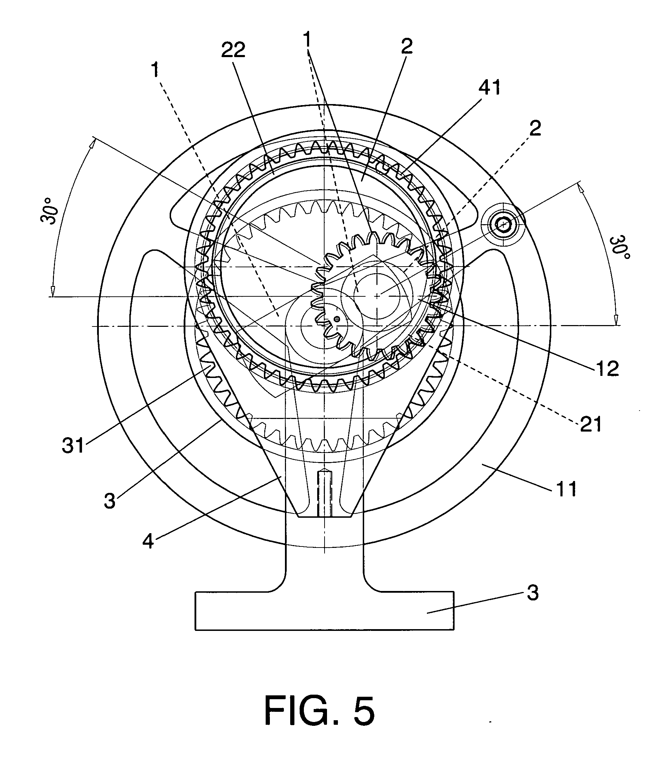

Figures 4 and 5 show the mechanism in a position in which from an initial vertical position, the flywheel has rotated 60° and it is clearly observed how the runner has been displaced linearly, remaining in a vertical position. The same is observed in Figures 2 and 3, in which the flywheel has already rotated 120° and the runner has followed its downward linear run conserving the same vertical position.

To explain the movement of the runner 4, it is assumed that the flywheel 11 rotates 60° to pass from the initial position shown in Figure 7 to the position shown in Figure 4. As the pinion 21 associated to the eccentric disk 2 has remained meshed to the inner fixed crown 31 of the body 3, the latter has been forced to rotate a double angle of 120°, but in the opposite direction, therefore the effect is that the eccentric disk 2 has rotated 60° in absolute value but in the opposite direction, therefore its center has remained in the same vertical in which it was initially located.

When the movement continues and the flywheel 11 rotates 60° more, as shown in Figures 2 and 3, the eccentric disk 2 also rotates 120° more (an absolute value of 60° in the opposite direction), which makes it continue to maintain its center in the same vertical line, as clearly seen in Figure 2.

At the same time, the runner 4, by means of its inner toothing 41, has remained meshed with the integral pinion 12 of the crankshaft 1, which has not only prevented it from rotating freely but has forced it to remain stationary as regards its orientation while it performed its vertical run driven by the eccentric disk 2.

While the pinion 12 of the crankshaft 1 has passed from the highest initial position, as seen in Figure 7 - where it is seen meshed with the inner toothing 41 of the runner 4 in the lowest point thereof -, to the position corresponding to having rotated 120° in a clockwise direction, the eccentric disk 2, rotating as much in the opposite direction, has moved the runner 4 to a position such that in order to mesh with the pinion 12 of the crankshaft 1 in the position seen in Figures 2 and 3, the point of contact of the pinion 12 of the crankshaft 1 has run through the inside of the crown 41 of the runner 4 and in relation to the latter, a relative circular run of 240° to which a meshing sector of the inner toothing 41 of the crown of 120° corresponds, as the teeth ratio is of 1/2, therefore the runner 4 must have maintained a stable orientation while it was displaced linearly.

When the pinion 12 of the crankshaft 1 has at last passed from the lowest position, i.e.; when the crankshaft 1 has continued rotating to 180°, the eccentric disk 2, driven by its associated pinion 21, has had to rotate 360° in relation to the crankshaft 1 but upon doing so in the opposite direction to that of the latter, the result is that it has only rotated 180° in absolute value, therefore its center has passed from the highest initial position to the lowest possible position.

If the eccentric disk 2, in an imaginary manner, had remained stable, in other words, it had not rotated in relation to the crankshaft 1, the runner 4 - meshed by its inner toothing 41 with the pinion 12 of the crankshaft 1 - must have rotated 90° in the same direction as the crankshaft 1, but if from there, the eccentric disk 2 is rotated 180° in the opposite direction to the crankshaft 1, i.e., it is taken to its real position, as the runner 4 is meshed by its inner toothing 41 with the pinion 12 of the crankshaft 1 and the gear ratio is 1/2, it would actually rotate 90° in the same direction as the eccentric disk, i.e., in the opposite direction to the rotation of the crankshaft 1, therefore the emphasized rotation is cancelled out, in other words, the runner 4 has not rotated during its linear displacement.

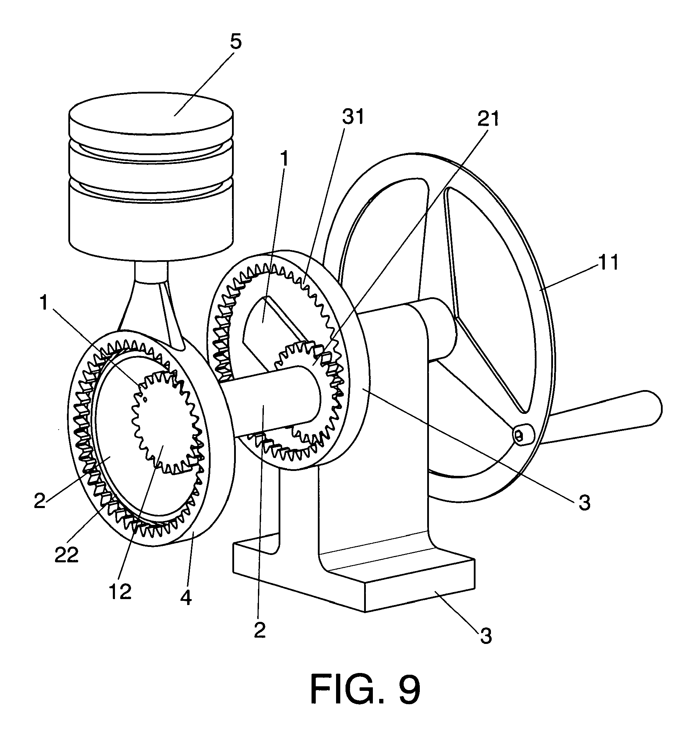

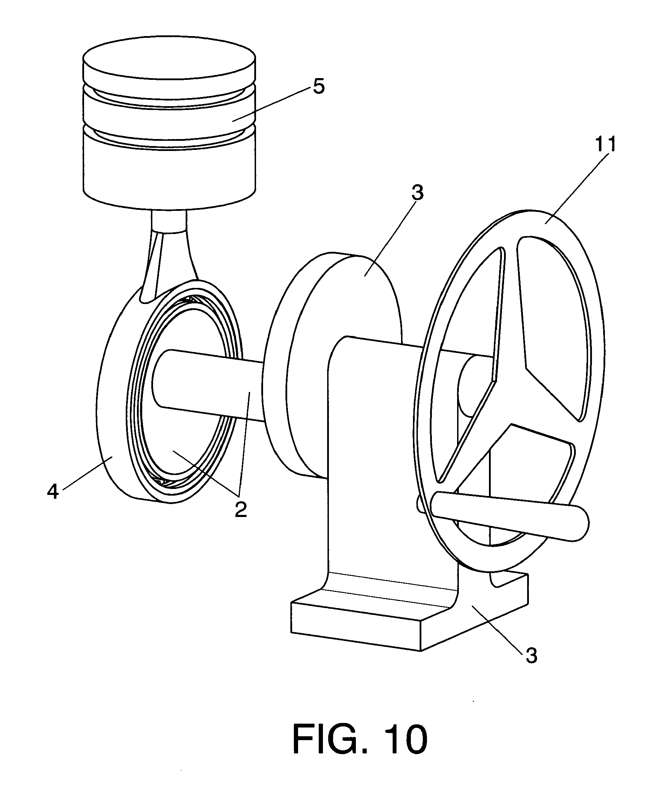

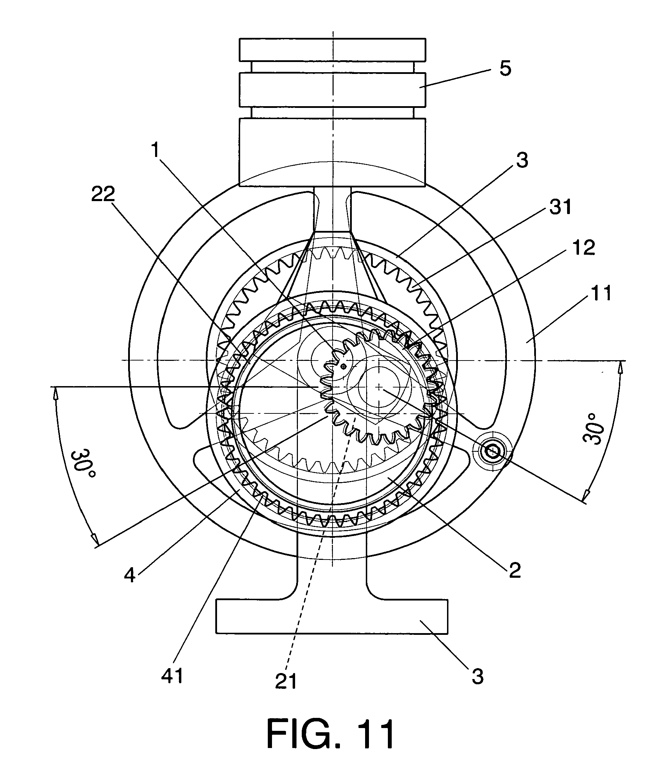

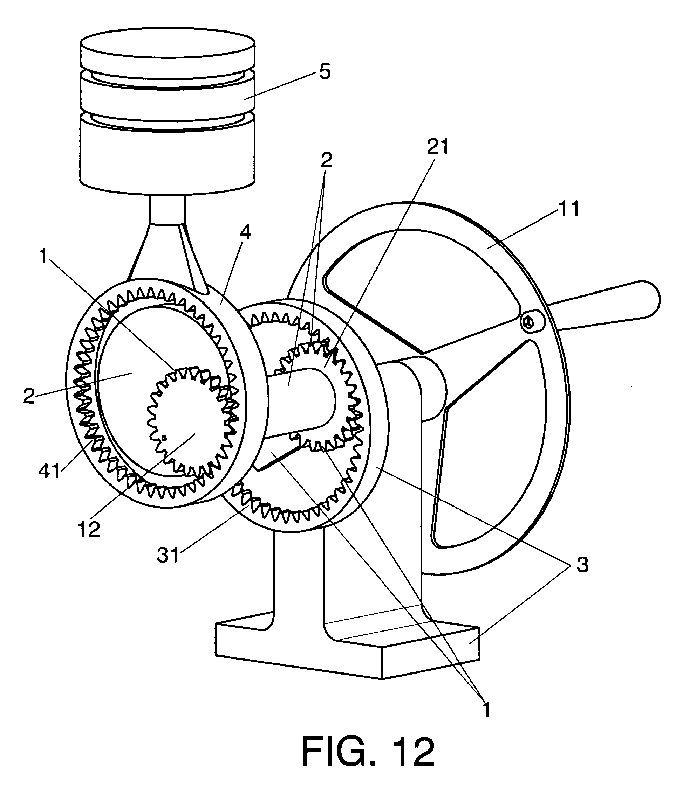

Figures 8 to 12 show positions equivalent to those described above, in a particular embodiment in which the runner 4 comprises a piston 5.

## Claims

1. A device intended to convert a rotary movement into another alternating linear movement, or vice versa, comprising the following elements:
■ at least one fixed part (3) or frame comprising a circular or cylindrical element the inner surface of which has means (31) which can cooperate mechanically with other parts,
■ at least one mobile part (1) intended to perform a rotary movement about a shaft coaxial with respect to said circular element of said fixed part (3),
■ at least one mobile part (4) which can be displaced according to a linear movement, including a circular or cylindrical element the inner surface of which has means (41) which can cooperate mechanically with said mobile part (1) intended to perform a rotary movement, and
■ at least one part (2) intended to be interposed between said circular or cylindrical element of said fixed part (3) and said circular or cylindrical element of said mobile part (4) and which cooperates mechanically with both elements such that the conversion of the circular movement into linear movement or vice versa is carried out without creating transverse forces.

2. The device according to claim 1, wherein said means which can cooperate mechanically comprise toothed wheels, pinions and/or gears.

3. The device according to claim 1 or 2, wherein said mobile part (1) intended to perform a rotary movement includes at least one flywheel-crank (11) located at one end, an actual crankshaft (1), and a toothed wheel or pinion (12) located at the other end, which cooperates mechanically with the inner gear (41) of said circular or cylindrical element of said mobile part (4) .

4. The device according to claim 3, wherein said flywheel-crank (11) and said pinion (12) do not rotate concentrically.

5. The device according to claims 1 to 4, wherein said part (2) intended to be interposed between said circular or cylindrical element of said fixed part (3) and said circular or cylindrical element of said mobile part (4) includes at least one eccentric disk with bearing (22) and with a toothed wheel or pinion (21) intended to cooperate mechanically with the inner gear (31) of said circular or cylindrical element of said fixed part (3).

6. The device according to claim 5, wherein the eccentricity of said crankshaft (1) is equal to that of said eccentric disk (2).

7. The device according to claims 2 to 6, wherein the ratio of the conjugated gear pairs is 1/2, i.e., the number of teeth of the inner gears or crowns (31, 41) of said circular or cylindrical elements (3, 4) is twice the number of teeth of said toothed wheels or pinions (21, 12).

8. The device according to claims 1 to 7, wherein said mobile part (4) which can be displaced according to a linear movement includes at least one piston (5).

9. A method for converting a rotary movement into another alternating linear movement, or vice versa, comprising the following steps:
a) providing at least one fixed part (3) including a circular or cylindrical element the inner surface of which has means (31) which can cooperate mechanically with other parts,
b) providing at least one mobile part (1) intended to perform a rotary movement about a shaft coaxial with respect to said circular element of said fixed part (3),
c) providing at least one mobile part (4) which can be displaced according to a linear movement, including a circular or cylindrical element the inner surface of which has means (41) which can cooperate mechanically with said mobile part (1) intended to perform a rotary movement,
d) providing at least one part (2) intended to be interposed between said circular or cylindrical element of said fixed part (3) and said circular or cylindrical element of said mobile part (4) and which cooperates mechanically with both elements
e) operating at least one of the two mobile parts such that the conversion of the circular movement into linear movement or vice versa is carried out without creating transverse force components.

10. The method according to claim 9, wherein said means which can cooperate mechanically comprise outer or inner toothings, toothed wheels and/or pinions.

11. The method according to claim 9 or 10, wherein said mobile part (1) intended to perform a rotary movement includes at least one flywheel-crank (11) located at one end, an actual crankshaft (1), and a toothed wheel or pinion (12) located at the other end, which cooperates mechanically with the inner gear (41) of said circular or cylindrical element of said mobile part (4) .

12. The method according to claim 11, wherein said flywheel-crank (11) and said pinion (12) do not rotate concentrically.

13. The method according to claims 9 to 12, wherein said part (2) intended to be interposed between said circular or cylindrical element of said fixed part (3) and said circular or cylindrical element of said mobile part (4) comprises at least one eccentric disk with bearing (22) and with a toothed wheel or pinion (21) intended to cooperate mechanically with the inner gear (31) of said circular or cylindrical element of said fixed part (3).

14. The method according to claim 13, wherein the eccentricity of said crankshaft (1) is equal to that of said eccentric disk (2).

15. The method according to claims 10 to 14, wherein the ratio of the conjugated gear pairs is 1/2,i.e., the number of teeth of the inner gears or crowns (31, 41) of said circular or cylindrical elements (3, 4) is twice the number of teeth of said toothed wheels or pinions (21, 12).

16. The method according to claims 9 to 15, wherein said mobile part (4) which can be displaced according to a linear movement includes at least one piston (5).
